# EUROPÄISCHE PATENTANMELDUNG

(11) **EP 1 632 136 A1**
(43) Veröffentlichungstag der Anmeldung: **08.03.2006**
(21) Anmeldenummer: 05107498.7
(22) Anmeldetag: 16.08.2005
(51) Int. Cl.: A23G 3/02

(54) **Vorrichtung und Verfahren zur Herstellung von Fondant**

(30) Priorität: 02.09.2004 DE 102004042921
(71) Anmelder: Klöckner Hänsel Processing GmbH, 30165 Hannover (DE)
(72) Erfinder: de Vilchez, José, 30177, Hannover (DE); Koch, Bernhard, 30655, Hannover (DE); Rocznik, Dieter, 30926, Seelze (DE)
(74) Vertreter: Taruttis, Stefan Georg

(57) **Zusammenfassung**

Die vorliegende Erfindung betrifft eine Vorrichtung zur Herstellung von Fondant sowie ein Verfahren zur Herstellung von Fondant. Die erfindungsgemäße Vorrichtung ist zur kontinuierlichen Herstellung von Fondant aus saccharidhaltiger Lösung mit einer Temperatur oberhalb oder im Bereich des Sättigungspunkts, d.h. Kochtemperatur geeignet. Die Vorrichtung besteht aus nur einer Förderschnecke mit gekühltem Stator (10) und gekühltem Rotor (20) zur Kühlung der saccharidhaltigen Lösung und zur Induktion der Kristallisation.

## Beschreibung

Die vorliegende Erfindung betrifft eine Vorrichtung zur kontinuierlichen Herstellung von Fondant sowie ein Verfahren zur kontinuierlichen Herstellung von Fondant.

Fondant ist ein Zweiphasen-System aus Saccharosekristallen und gesättigter Saccharidlösung. Die Herstellung erfolgt aus den Bestandteilen Saccharose, Glukosesirup bzw. Invertzucker, wahlweise Sorbit, die in Wasser zu einer Slurry gemischt bzw. teilweise gelöst werden. Diese Slurry wird durch Kochen auf einen Trockensubstanzgehalt von ca. 80 bis 92%, bevorzugt 88 bis 90% konzentriert, was bei atmosphärischem Druck einer Siedetemperatur von ca. 110 bis 125 °C, im bevorzugten Bereich 118 bis 121 °C entspricht. Die heiße saccharidhaltige Lösung weist dabei einen Trockensubstanzgehalt auf, der bei Abkühlung dem einer übersättigten Lösung entspricht.

Im Anschluß an die Kochung wird die heiße saccharidhaltige Lösung bei starker Kühlung gerührt und intensiv tabliert, um die Bildung von Saccharosekristallen kleiner Dimensionen zu fördern, sodass das Endprodukt aus einer Mischung gesättigter Saccharidlösung und Saccharosekristallen besteht, die bei Raumtemperatur im Gleichgewicht steht und stabil ist.

Das Kühlen und Mischen zur Erzeugung der erwünschten Kristallgrößen, auch als Tablieren bezeichnet, kann technisch durch verschiedene Verfahren realisiert werden. Laut "Zucker und Zuckerwaren", Hoffmann, Mauch, Untze 2002, B. Behr's Verlag, Hamburg ist es erwünscht, dass die Dimensionen der Zuckerkristalle in einem Bereich kleiner 30 µm vorliegen, mit der Hauptmenge in einem Bereich um 10 µm und nur ein geringer Teil noch kleiner ist. Oberhalb einer Korngröße von 30 µm werden Partikel beim Verzehr als grob empfunden, Kristalle sehr kleiner Korngrößen sind hingegen bei der Weiterverarbeitung nicht unproblematisch, da diese beim Erwärmen des Fondants vollständig in Lösung gehen können und bei der Rekristallisation aufgrund erneuten Abkühlens nicht mehr als Kristallisationskeim zur Verfügung stehen, sodass vorhandene Kristalle stärker wachsen und die maximale Korngröße erhöht wird.

Das Korngrößenspektrum des Fondants ist dann stabil, wenn die feste Phase der Saccharosekristalle mit der zuckergesättigten flüssigen Phase im Gleichgewicht steht. Dieses Gleichgewicht ist dann bei einer Temperatur unterhalb ca. 65 °C bis Raumtemperatur stabil, entsprechend werden Austrittstemperaturen von Fondant bei der maschinellen Herstellung von unterhalb 65 °C, vornehmlich unterhalb ca. 60 °C bevorzugt.

Das Verhältnis flüssiger Phase zu fester Phase des fertigen Fondants hängt vom Wassergehalt der Mischung ab. Der Wassergehalt ist durch das Verhältnis von Kochtemperatur und Druck, der beim Abdampfen der Brüden anliegt, einstellbar.

Die gegenwärtig in der Produktion eingesetzten Vorrichtungen zur Herstellung von Fondant sind zusammenfassend in "Zucker und Zuckerwaren", Hoffmann (a.a.O.) dargestellt.

So ist bekannt, dass bei einer von Baker Perkins entwickelten Anlage die gekochte, noch heiße Zuckerlösung mit einem Trockensubstanzgehalt, der bei niedrigen Temperaturen einer Übersättigung entspricht, über eine zylindrische Kühltrommel geleitet und in den Zustand der Übersättigung überführt wird. Anschließend wird die übersättigte Masse in eine sogenannte Tablierschnecke geleitet, in der die Kristallisation induziert wird. Die Tablierschnecke ist wassergekühlt und horizontal angeordnet. Die Eintritts- und Austrittsöffnungen der Tablierschnecke sind zur Atmosphäre hin offen, ausgetragene Fondantmasse kann in einen darunter liegenden Temperierbehälter laufen.

Nach einem anderen Verfahren, das von der Firma Otto Hänsel entwickelt wurde, wird die gekochte Zuckerlösung nach dem Abscheiden der Brüden bei atmosphärischem Druck in einen Vakuumraum gesaugt und dort versprüht. Durch die Abkühlung mittels Vakuumierung wird die gewünschte Übersättigung erreicht, anschließend wird die Masse ebenfalls in einer wassergekühlten Tablierschnecke tabliert. Der Austrag aus der Tablierschnecke erfolgt mittels einer Vakuumschleuse unter Vakuum.

Eine weitere Tabliermaschine, die von Firma Otto Hänsel entwickelt wurde, weist zwei übereinander angeordnete Schnecken auf, die nacheinander von der gekochten Saccharidlösung durchlaufen werden. Diese beiden Schnecken sind gekühlt, wobei die erste, oben liegende Schnecke auch als Vortablierzylinder bezeichnet wird, in der die heiße Saccharidlösung gekühlt und durchmischt wird. Dabei soll bereits die Rekristallisation der Saccharose einsetzen. Diese Schnecke ist zur Abführung von Wärme innen gekühlt, der Zylinder weist eine Mantelkühlung auf. Nach Durchlaufen des Vortablierzylinders wird die Masse in den zweiten, darunter liegenden Tablierzylinder überfährt, der ebenfalls eine Mantelkühlung und eine Innenkühlung der Tablierschnecke aufweist. Die zweite Tablierschnecke ist im Einlaufbereich als Förderorgan konzipiert, im anschließenden Bereich als Schlagflügelwerk.

Die bekannten Vorrichtungen zur Herstellung von Fondant aus gekochter Saccharidlösung, die durch Abscheidung von Brüden bei atmosphärischem Druck aufgrund der Kochtemperatur auf eine bestimmte Trockensubstanz, bzw. Wassergehalt, eingestellt ist, weisen jeweils eine erste Kühlstufe auf, und im Anschluss daran eine Tablierschnecke. Dabei dient die erste Kühlstufe, beispielsweise bei Baker Perkins als Kühltrommel ausgebildet, zur Abkühlung der gekochten Saccharoselösung auf eine Temperatur, in der der Trockensubstanzgehalt einem übersättigten Zustand entspricht. Die anschließende Tablierschnecke dient zur Erzeugung einer Vielzahl von Kristallisationskeimen. Die dabei anfallende Kristallisationswärme wird durch Kühlung abgeführt.

Die DE 19 23 635 A beschreibt eine Vorrichtung zur Herstellung von Fondant mit einem Kühl- und Schlagwerk aus gekochter Zuckerlösung. Die Bezugnahme der DE 19 23 635 auf ein Hauptpatent zeigt, dass die gekochte Zuckerlösung vor der Induktion der Kristallisation durch mechanische Beanspruchung auf eine Temperatur von 40 bis 45 °C gekühlt wird. Auf diese Weise wird zunächst eine unterkühlte bzw. übersättigte Zuckerlösung hergestellt, die in einem zweiten Verfahrensschritt, nämlich in dem anschließend durchströmten Schlagwerk, durch mechanische Anregung der Kristallisation zu Fondant umgesetzt wird. Die DE 19 23 635 legt besonderes Augenmerk auf eine schonende Behandlung der unterkühlten und übersättigten Zuckerlösung und stellt dazu einen beheizten Ventilsitz bereit, der von dieser übersättigten Zuckerlösung umströmt wird.

Die DE 31 30 968 beschreibt eine Vorrichtung und ein Verfahren zur Herstellung belüfteter Zuckermassen, die zwei nacheinander von Zuckermasse durchströmbare Abschnitte aufweist, nämlich eine Misch- und Schlagvorrichtung, sowie eine Ziehvorrichtung, die im Auslaufbereich der Misch- und Schlagvorrichtung angeordnet ist. Die beiden Abschnitte werden durch verschiedene Bereiche eines rotationssymmetrischen Körpers, der innerhalb eines Gehäuses rotieren kann, gebildet. Die Misch- und Schlagvorrichtung bildet einen Arbeitsraum mit Misch- und Schlagwerkzeugen, beispielsweise Stift- oder Schaufelreihen bzw. -kränze, die alternierend an Stator und Rotor befestigt sind. Die anschließend von der Zuckerlösung zu durchströmende Ziehvorrichtung wird durch einen hohlkegelstumpf förmigen Spaltraum, alternativ durch einen zylindrischen Spaltraum, der von Zylinderumfangsflächen begrenzt wird, gebildet.

Die US 21 97 919 offenbart eine Vorrichtung zur Herstellung von Kaugummi oder anderer Süßwaren, die zwei aufeinander folgende Schlagwerke aufweist, aus denen belüftete Masse zur Kühlung und Extrusion in eine Förderschnecke geleitet wird.

Diese bekannten Vorrichtungen gehen davon aus, dass zur Herstellung von Fondant zunächst die Kühlung der Saccharidlösung auf eine Temperatur erforderlich ist, die bei dem Trockensubstanzgehalt der Saccharidlösung einen übersättigten, instabilen Zustand darstellt. Die erwünschten feinteiligen Saccharosekristalle werden anschließend durch heftige Bewegung induziert.

Die bekannten Vorrichtungen setzen jeweils Verfahren zur Herstellung von Fondant um, bei denen die Saccharidlösung nach der Kochung gekühlt wird, ohne dass eine Rekristallisation der Saccharose bereits intensiv angeregt wird. In dieser Saccharidlösung, die aufgrund der erniedrigten Temperatur stark übersättigt und instabil ist, kann nun durch kräftiges Rühren die Bildung von Kristallisationskeimen induziert werden. Die Tablierschnecken der vorgenannten bekannten Vorrichtungen werden im Fachgebiet auch als Schlagwerke bezeichnet, um deren Wirkung zur Induktion der Kristallisation zu beschreiben. Die Vielzahl möglichst gleichzeitig induzierter Kristallisationskeime verhindert dabei die Entstehung großer Kristalle.

Dieser Rohfondant, der aus der Tabliermaschine kommt, wird noch während einer anschließenden, sogenannten Reifephase von etwa 24 h gelagert. In dieser Reifephase wachsen die vielen Kristallisationskeime, die durch das Tablieren induziert wurden, was zu einer Verfestigung des Fondants führt. Die dabei freiwerdende Kristallisationswärme hält den Fondant noch für einige Stunde warm. Im Anschluss an diese Nachkristallisation wird der Fondant weicher, da sich das Wasser zwischen kristalliner Phase und flüssiger Phase neu verteilt, was dazu führt, dass das Anwachsen der Kristalle im Anschluss an die Tablierung wieder durch Rücklösen aufgehoben wird.

Ein Weg zur Vermeidung der Reifephase des Fondants nach der Induzierung der Kristallisation ist die von APV Baker bzw. Baker Perkins entwickelte Teilung des gekochten Stroms der Saccharidlösung nach dem Kocher, sodass ca. zwei Drittel der gekochten Saccharidlösung unmittelbar zu Fondant umgesetzt werden, während das verbleibende Drittel als sogenannter Bob-Sirup dem Fondant am Ausgang der Tablierschnecke zugemischt wird. Dieser Bob-Sirup hat eine höhere Temperatur als der Rohfondant. Auf diese Weise soll die zuvor erforderliche Reifephase umgangen und ein Fondant erhalten werden, der unmittelbar der Weiterverarbeitung zugeführt werden kann.

### Aufgabe der Erfindung

Gegenüber dem bekannten Stand der Technik ist es die Aufgabe der vorliegenden Erfindung, eine vereinfachte Vorrichtung bereitzustellen, die zur kontinuierlichen Herstellung von Fondant aus gekochter Saccharidlösung geeignet ist. Eine weitere Aufgabe der Erfindung besteht darin, ein kontinuierliches Verfahren zur Herstellung von Fondant aus gekochter Saccharidlösung bereitzustellen, mit dem appartiv vereinfacht Fondant hergestellt werden kann.

### Allgemeine Beschreibung der Erfindung

Die vorliegende Erfindung stellt eine Vorrichtung zur Herstellung von Fondant aus einer saccharidhaltigen Lösung bereit, die noch Kochtemperatur aufweist, bzw. eine Temperatur oberhalb bis in den Bereich ihres Sättigungspunkts. Das bedeutet, dass die erfindungsgemäße Vorrichtung unmittelbar mit saccharidhaltiger Lösung beschickt werden kann, die eine Temperatur oberhalb bis in den Bereich des Sättigungspunkts aufweist, also beispielsweise Kochtemperatur bei einem Trockensubstanzgehalt an Sacchariden von ca. 88 ― 90 %. Die Temperatur oberhalb oder im Bereich des Sättigungspunkts ist ausreichend hoch, um die Lösung nicht gezielt übersättigt werden zu lassen.

Beim bekannten Stand der Technik ist jeweils eine Kühlstufe zur Kühlung der saccharidhaltigen Lösung auf eine Temperatur im sicher übersättigten Bereich, d.h. Überführen der gekochten saccharidhaltigen Lösung in eine deutlich übersättigte Lösung, vorgesehen. Die Anlage von Baker Perkins sieht zu diesem Zweck eine Kühltrommel vor, die von Otto Hänsel bekannte Anlage die erste Kühlschnecke zur Vortablierung. Dies steht im Einklang mit der ursprünglichen Fondantherstellung per Hand, bei der die Kristallbildung in einer gekühlten übersättigten Lösung durch heftige Bewegung mit einem Spatel auf einer Marmorplatte induziert wird.

Die Erfindung zeigt überraschenderweise, dass eine separate Einrichtung zur Kühlung der saccharidhaltigen Lösung auf eine Temperatur, bei der ein sicher übersättigter Zustand vorliegt, vor der Induktion der Kristallisation nicht erforderlich ist.

Die im vorangehend diskutierten Stand der Technik vorhandene separate Kühlvorrichtung zur Kühlung der saccharidhaltigen Lösung nach der Kochung auf eine Temperatur unterhalb ihres Sättigungspunkts, d.h. Kühlung der saccharidhaltigen Lösung bis zu einer Temperatur, an der sie aufgrund ihres Trockensubstanzgehalts in einem sicher übersättigten Zustand vorliegt, ist bei der erfindungsgemäßen Vorrichtung nicht vorhanden.

Im Unterschied zum Stand der Technik ermöglicht es die erfindungsgemäße Vorrichtung zur Herstellung von Fondant, die saccharidhaltige Lösung mit einer Temperatur oberhalb bzw. im Bereich ihres Sättigungspunkts unmittelbar zu Fondant umzusetzen, der für die weitere Verarbeitung geeignet ist.

Die erfindungsgemäße Vorrichtung weist zur Kühlung der gekochten Saccharidlösung nach der Kochung und zur Induktion der Kristallisation lediglich eine Förderschnecke mit gekühltem Stator und Rotor auf, durch die saccharidhaltige Lösung ohne Vorkühlung in einem Prozeßschritt zu Fondant umgesetzt wird. Die innere Oberfläche des Stators ist zylindrisch; der Rotor weist eine Wendel auf, die eine Einfach- oder Mehrfachwendel, vorzugsweise eine Doppelwendel ist.

Die bekannten Anlagen zur Herstellung von Fondant weisen insbesondere auf Grund der mehrstufigen Behandlung zwangsläufig Bereiche auf, in denen ankristallisierte Saccharidlösung nicht sicher zwangsgefördert wird. Dies hat zur Folge, dass einzelne bereits vorhandene Kristalle hier deutlich länger verweilen können, während sie von einer übersättigten Saccharoselösung umgeben sind, sodass sie zwangsläufig unkontrolliert wachsen. Festgestellt wurden hierdurch verursachte Kristalle von bis zum mehreren 100 µm, was eine Qualitätseinbuße für den erhaltenen Fondant darstellt.

Die erfindungsgemäße Vorrichtung hat einen weiteren Vorteil darin, dass im Unterschied zu den bekannten Anlagen die Produktführung in der erfindungsgemäßen Vorrichtung keine unkontrollierte Verweilzeit und damit kein unkontrolliertes Wachstum von Saccharosekristallen zulässt.

Die erfindungsgemäße Förderschnecke weist vorzugsweise ein Verhältnis der zur Wärmeübertragung wirksamen Länge von Stator und Rotor zum Innendurchmesser des Stators bzw. zum Außendurchmesser des Rotors zwischen 8 und 10, bevorzugt zwischen 8,5 und 9,5 auf. Die Dimensionierung von Rotor und Stator wird erfindungsgemäß durch Anpassung der zur Verfügung stehenden Wärmeübertragungsfläche des Stators und des Rotors an den Temperaturgradienten des Kühlwassers zur saccharidhaltigen Lösung ausgelegt, so dass eine Kühlung der saccharidhaltigen Lösung von der Eintrittstemperatur oberhalb des Sättigungspunkts auf ca. 55 bis 65 °C, bevorzugt ca. 60 °C erreicht wird. Dabei ist die Vorrichtung so dimensioniert, dass freiwerdende Kristallisationswärme ebenfalls abgefährt wird.

Als weiterer Einflußfaktor auf die Korngröße des Fondants ist die Umdrehungszahl des Rotors zu berücksichtigen. In der bevorzugten Ausfixhrung ist der Rotor durch einen Motor zu Drehzahlen im Bereich zwischen 100 bis 500 U/min, bevorzugter zwischen 200 und 350 U/min einstellbar antreibbar.

Anhand der vorgenannten Parameter ist ein Fachmann in der Lage, eine erfindungsgemäße Vorrichtung zu dimensionieren. Als ein Anhaltspunkt werden die Abmessungen einer erfindungsgemäßen Vorrichtung in einer Ausfixhrungsform für einen Durchsatz der Trockensubstanz von ca. 500 kg pro Stunde angegeben.

Bei einem Durchsatz von ca. 500 kg/h beträgt für eine erfindungsgemäße Vorrichtung die zur Wärmeübertragung wirksame Länge des Stators und Rotors 1500 bis 2500 mm, vorzugsweise ca. 2000 mm. Als zur Wärmeübertragung wirksame Länge wird die Länge zwischen Eintritts- und Austrittsöffnung im Stator bezeichnet, die auch vom Rotor ausgefüllt wird.

Der Rotor hat dabei einen Außendurchmesser von 200 bis 250 mm bei einer Wandstärke von 10 bis 30 mm, gemessen einschließlich der Höhe der Wendel.

In bevorzugter Ausführung beträgt der Ringspalt zwischen Rotor und Stator, gemessen von der Wendelhöhe, 1 bis 10 mm, bevorzugt 2 bis 5 mm.

Die erfindungsgemäße Vorrichtung ermöglicht ein Verfahren zur Herstellung von Fondant aus saccharidhaltiger Lösung, die eine Temperatur im Bereich ihres Sättigungspunkts aufweist, in nur einem Prozeßschritt. Dabei ist gefunden worden, dass saccharidhaltige Lösung im Anschluss an die Kochung bei 115 bis 125 °C und nach Abdampfen der Brüden bei atmosphärischem Druck unmittelbar in die Eintrittsöffnung des Stators eintreten gelassen werden kann. Die Temperatur des Fondants an der Austrittsöffnung wurde zu ca. 60 bis 65 °C gemessen.

Der mit der erfindungsgemäßen Vorrichtung produzierte Fondant weist unmittelbar an die Herstellung und auch nach einer Lagerdauer von 24 Stunden eine stabile Verteilung der Korngrößen auf, die im wesentlichen im Bereich um 10 µm liegt. Der auf diese Weise erhaltene Fondant war zur unmittelbaren Weiterverarbeitung oder zur Lagerung geeignet und entspricht im sensorischen Test den Anforderungen an einen qualitativ hochwertigen Fondant.

Daher ermöglicht die erfindungsgemäße Vorrichtung die Herstellung von stabilem Fondant in einem einzigen Apparat unmittelbar aus saccharidhaltiger Lösung, die eine Temperatur oberhalb oder im Bereich ihres Kristallisationspunkts aufweist, beispielsweise Kochtemperatur. Eine separate Kühlvorrichtung zur Unterkühlung der saccharidhaltigen Lösung im Anschluß an die Kochung auf eine Temperatur unterhalb ihres Sättigungspunkts ist daher in der erfindungsgemäßen Vorrichtung nicht erforderlich und auch nicht enthalten.

In bevorzugter Ausfixhrungsform ist die erfindungsgemäße Vorrichtung hinsichtlich der Kühlung von Rotor und Stator so dimensioniert, dass diese einen Kühlmitteldurchfluß erlauben, der ausreicht, um einen Temperaturgradienten über die zur Wärmeübertragung wirksame Länge von Rotor und Stator von maximal 10 °C, bevorzugt maximal 5 °C, besonders bevorzugt maximal 1 bis 2 °C zu ermöglichen. Dieser Temperaturgradient über die zur Wärmeübertragung wirksame Länge von Rotor und Stator kann als Erwärmung des Kühlmittels aufgrund des Durchtritts durch Rotor und Stator bestimmt werden. In einer weiter bevorzugten Ausführungsform wird der Kühlmittelstrom durch Rotor und Stator dabei im Gegenstrom zum Durchtritt der Saccharidlösung geführt. Ein bevorzugtes Kühlmittel ist Wasser.

In weiter bevorzugter Ausfixhrungsform wird der jeweils durch Rotor und Stator tretende Kühlmittelstrom auf die gleiche Eintrittstemperatur eingestellt.

### Genaue Beschreibung der Erfindung

Die Erfindung wird nun mit Bezugnahme auf die Figuren genauer beschrieben, in denen
- Figur 1 eine schematische Querschnittsansicht der erfmdungsgemäßen Vorrichtung darstellt und
- Figur 2 den Ausschnitt A aus Figur 1 im Querschnitt vergrößert zeigt.

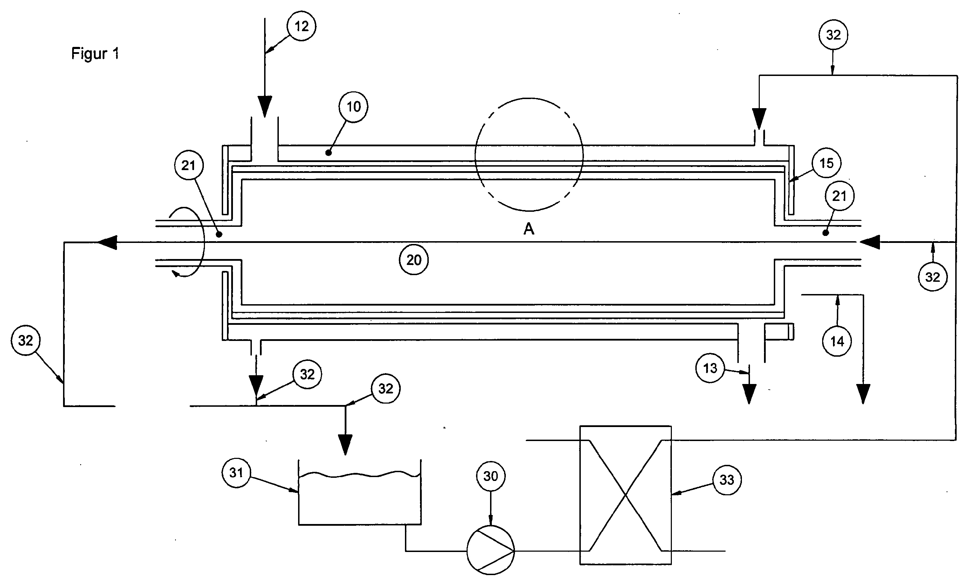

Wie in Figur 1 dargestellt ist, weist die erfindungsgemäße Vorrichtung einen Stator 1 auf, in dem ein Rotor 2 axial drehbar angeordnet ist. Der Stator 10 weist einen Doppelmantel zur Temperierung, d.h. zur Kühlung durch beispielsweise Wasser auf, der Rotor 20 ist innen hohl und ist im Betrieb durch die Durchtrittsöffnungen 11 für Kühlmittel in den Lagerzapfen 21 durchströmbar.

Der Rotor 20 ist durch einen Motor (nicht dargestellt) in Drehung zu versetzen. Gekochte saccharidhaltige Lösung kann durch die Eintrittsöffnung 12 des Stators 10 in den Spalt zwischen Rotor 20 und Stator 10 geführt werden und durch eine der beiden alternativen Austrittsöffnungen 13 oder 14 austreten. Dabei ist die Austrittsöffnung 13 radial oder tangential zum Rotor 20 im Stator 10 angeordnet, die bevorzugte Austrittsöffnung 14 ist axial zum Rotor 20 angeordnet. Für den Fall der radialen oder tangentialen Austrittsöffnung 13 ist die axiale Abschlussplatte 15 so ausgebildet, dass der Stator 10 beidseitig axial abgeschlossen ist.

Die bevorzugte Austrittsöffnung 14 kann beispielsweise in Form einer Öffnung in der axialen Abschlussplatte 15 dargestellt sein, die den Stator 10 an dessen Ende mit der Austrittsöffnung 14 abschließt. Für die axial angeordnete Austrittsöffnung 14 beträgt die Öffnung in der axialen Abschlussplatte 15 mindestens zehn Prozent der überdeckten Fläche des Ringspalts zwischen Rotor und 20 und Stator 10, vorzugsweise 20 bis 50% oder darüber. Dabei ist es auch möglich, die axiale Abschlussplatte 15 so auszubilden, dass die Querschnittsfläche des Ringspalts zwischen Stator 10 und Rotor 20 nur zu einem geringen Teil, beispielsweise bis zu 50%, bevorzugt bis zu 30%, besonders bevorzugt bis zu 10% überdeckt wird, so dass Fondant im wesentlichen ohne Umlenkung axial aus der Vorrichtung austreten kann.

Die axiale Anordnung der Austrittsöffnung, die als Austrittsöffnung 14 schematisch dargestellt ist, erlaubt als besonderen Vorteil den Austritt von Fondant bei niedrigerer Temperatur, als dies die tangential angeordnete Austrittsöffnung 13 ermöglicht.

In der bevorzugten Ausfixhrungsform der Erfindung weist die Vorrichtung solche Querschnitte der Kühlmittelleitungen und eine solche Dimensionierung des Doppelmantels des Stators und auch des Innenvolumens des Rotors auf, dass ein Kühlmitteldurchfluß durch Rotor und Stator einstellbar ist, der ausreicht, um einen Temperaturgradienten über die zur Wärmeübertragung wirksame Länge von Rotor und Stator zu ermöglichen, der maximal 10 °C, bevorzugt maximal 5 °C, besonders bevorzugt maximal 2 °C beträgt. Das mit der erfindungsgemäßen Vorrichtung durchgeführte Verfahren zur Herstellung von Fondant wird daher ebenfalls vorzugsweise mit einem maximalen Temperaturgradienten von 10 °C, bevorzugt maximal 5 °C, bevorzugter maximal 2 °C über die zur Wärmeübertragung wirksame Länge von Rotor und Stator durchgeführt. Ein Fachmann ist in der Lage, den erforderlichen Kühlmittelfluß zu errechnen, mit dem der gemäß der bevorzugten Ausführungsform geforderte Temperaturgradient eingestellt werden kann. Dabei ist die abzuführende Wärmemenge zu berücksichtigen, die sich aus der Temperaturerniedrigung der saccharidhaltigen Lösung während der Fondant-Herstellung sowie der freiwerdenden Kristallisationswärme zusammensetzt, zuzüglich der durch die Drehung des Rotors eingetragenen Wärmeenergie. Hinsichtlich der Dimensionierung der Querschnitte von Kühlmittelleitungen, Querschnittsfläche des Doppelmantels des Stators sowie der Querschnittsfläche des Innenvolumens des Rotors sind neben der Wärmekapazität des Kühlmittels die Wärmeleitkoeffizienten und Wärmeübergangskoeffizienten zu berücksichtigen, die den Wärmeübergang aus der saccharidhaltigen Lösung in das Kühlmittel bestimmen.

Besonders bevorzugt ist es, die erfindungsgemäße Vorrichtung als Modul in Kombination mit einem eigenen internen Kühlsystem anzuordnen. Ein solches Kühlsystem verwendet Kühlmittelleitungen 32, durch die das Kühlmittel mittels einer Umwälzpumpe 30 sowohl durch den Doppelmantel des Stators 10, als auch durch das Innenvolumen des hohlen Rotors 20 zirkuliert wird. Dabei wird das Kühlmittel vorzugsweise sowohl im Stator 10 als auch im Rotor 20 im Gegenstrom zur generellen Strömungsrichtung des Fondants von der Eintrittsöffnung 12 zur Austrittsöffnung 13, 14 geführt. Der Kühlmittelkreislauf weist ein Reservoir oder einen Ausgleichsbehälter 31 auf, der auch als zentraler Behälter für Kühlmittel nach dessen Durchtritt durch den Stator 10 und/oder den Rotor 20 dienen kann. Ein Verbrauch des im Kreislauf strömenden Kühlmittels findet vorteilhaft nicht statt.

Die vom Kühlmittel aus Stator 10 und Rotor 20 abgeführte Wärme wird durch einen Wärmetauscher 33, der ein Plattenwärmetauscher oder Rohrbündelwärmetauscher sein kann, aus dem Modul abgeführt. Ein solches Modul bietet den Vorteil, dass die Temperierung der erfindungsgemäßen Vorrichtung zur Fondantherstellung unabhängig von der Temperatur des zur Verfügung stehenden betrieblichen Kühlwassers in einem eigenen System kontrolliert werden kann.

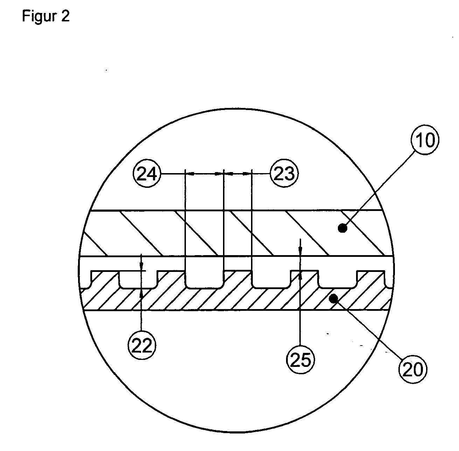

Wie im Detail in der Figur 2 gezeigt, wird der Ringspalt zwischen Stator 10 und Rotor 20 durch die in den Rotor 20 eingearbeitete Wendel und die Innenseite des Stators 10 bestimmt. Dabei ist es bevorzugt, dass der Rotor 20 eine Wendel mit zwei Gängen aufweist, deren Wendelhöhe 22 im Bereich von 5 bis 20 mm, vorzugsweise 5 bis 15 mm beträgt. Die Wendelbreite 23 beträgt hier 5 bis 30 mm, vorzugsweise 15 bis 25 mm. Der Wendelabstand 24 beträgt vorzugsweise 5 bis 20 mm. Der Spalt 25 zwischen der Wendelhöhe 22 und der Innenseite des Stators 10 beträgt 1 bis 10 mm, vorzugsweise 2 bis 5 mm.

Der Stator 10 weist eine zylindrische glatte innere Oberfläche auf.

Vorzugsweise sind die Stutzen zur Zu- und Abführung von Kühlmittel in Eintrittsöffnung 12 tangential zum Stator 10 angeordnet.

### Beispiel: Herstellung von Fondant mit der erfindungsgemäßen Vorrichtung

Saccharidhaltige Lösung wurde aus 100 kg Kristallzucker (Saccharose), 20 kg Glukosesirup mit 30 Litern Lösungswasser angesetzt und in einem kontinuierlich arbeitenden Kocher mit Dampfbeheizung auf eine Endtemperatur von 118 - 121°C erwärmt. Unmittelbar im Anschluss an die Kochung wurde die saccharidhaltige Lösung in einem Abdampfbehälter unter atmosphärischem Druck abdampfen gelassen, die entstehenden Brüden wurden abgeführt. Bei diesen Bedingungen stellt sich ein Trockensubstanzgehalt der fertig gekochten saccharidhaltigen Lösung von ca. 88 - 90% ein.

Die abgedampfte, saccharidhaltige Lösung wurde durch ein Zulaufrohr der Eintrittsöffnung 12 der erfindungsgemäßen Vorrichtung zugeführt, die im wesentlichen horizontal angeordnet war. Alternativ zu einem einfachen Zulaufrohr ohne Temperierung konnte das Zulaufrohr mit Dampf mit gleichem Druck wie der Kocher beheizt werden.

Kühlwasser wurde im Gegenstrom durch den Doppelmantel des Stators 10 sowie den Innenraum des Rotors 20 zirkuliert, dabei betrug die Kühlwassertemperatur ca. 20 bis 30 °C. Der Temperaturgradient über die zur Wärmeübertragung wirksame Länge von Rotor und Stator, gemessen als Erwärmung des Kühlmittels Wasser nach Durchtritt durch Rotor und Stator, betrug maximal 2 °C.

Bei einem zugeführten Massestrom von ca. 500 kg pro Stunde Trockensubstanz der zugeführten Lösung, deren Temperatur im Bereich ihres Kristallisationspunkts lag, konnte kontinuierlich Fondant hergestellt werden. Die Austrittstemperatur des Fondants betrug zwischen 60 und 65 °C und konnte durch Variation der Drehzahl des Rotors 20, der Durchflußmenge des Kühlwassers und der Kühlwassertemperatur beeinflusst werden.

Erfmdungsgemäß hergestellter Fondant hatte bei mikroskopischer Betrachtung eine durchschnittliche Korngröße um 10 µm mit sehr geringem Anteil größerer Kristalle. Der sensorische Test ergab, dass erfindungsgemäß hergestellter Fondant angenehm glatt und geschmeidig war. Diese Eigenschaften wurden sowohl unmittelbar nach der Herstellung als auch im Anschluss an einem Lagerdauer von 24 Stunden bei Raumtemperatur festgestellt.

### Bezugszeichenliste:

- 10: Stator
- 11: Durchtrittsöffnungen für Kühlwasser
- 12: Eintrittsöffnung
- 13: Austrittsöffnung
- 14: axiale Austrittsöffnung
- 20: Rotor
- 21: Lagerzapfen
- 22: Wendelhöhe des Rotors
- 23: Wendelbreite des Rotors
- 24: Wendelabstand des Rotors
- 25: Abstand Wendelhöhe - Stator
- 30: Umwälzpumpe
- 31: Ausgleichsbehälter
- 32: Kühlwasserleitung
- 33: Wärmetauscher

## Patentansprüche

1. Vorrichtung zur kontinuierlichen Herstellung von Fondant aus saccharidhaltiger Lösung mit einer Temperatur oberhalb oder im Bereich des Sättigungspunkts, die eine Förderschnecke mit gekühltem Stator (10) und gekühltem Rotor (20) aufweist, **gekennzeichnet dadurch, dass** die Vorrichtung nur eine Förderschnecke mit gekühltem Stator (10) und gekühltem Rotor (20) zur Kühlung der saccharidhaltigen Lösung und zur Induktion der Kristallisation aufweist.

2. Vorrichtung nach Anspruch 1, **dadurch gekennzeichnet, dass** die Austragsöffnung (14) der Förderschnecke axial im Stator (10) angeordnet ist.

3. Vorrichtung nach Anspruch 2, **dadurch gekennzeichnet, dass** die Austragsöffnung (14) **dadurch** gebildet ist, dass die Austragsöffnung (14) eine Öffnung in der axialen Abschlussplatte (15) ist, die die Querschnittsfläche des Ringspalts zwischen Stator (10) und Rotor (20) zu maximal 50 % überdeckt.

4. Vorrichtung nach einem der vorangehenden Ansprüche, **dadurch gekennzeichnet, dass** der Rotor (20) eine Mehrfachwendel oder Doppelwendel aufweist.

5. Vorrichtung nach einem der vorangehenden Ansprüche, **dadurch gekennzeichnet, dass** die Zuführleitung, durch die saccharidhaltige Lösung von einem Kocher zur Eintrittsöffnung (12) der Förderschnecke geleitet wird, doppelwandig und mit Dampf oder Druckwasser beheizbar ist.

6. Vorrichtung nach einem der vorangehenden Ansprüche, **dadurch gekennzeichnet, dass** diese einen Kühlmitteldurchfluß durch Rotor und (20) und Stator (10) aufnehmen kann, der ausreicht, um einen Temperaturgradienten über die zur Wärmeübertragung wirksame Länge von Rotor (20) und Stator (10) von maximal 10 °C einzustellen.

7. Vorrichtung nach Anspruch 6, **dadurch gekennzeichnet, dass** der Temperaturgradient maximal 5 °C beträgt.

8. Vorrichtung nach einem der vorangehenden Ansprüche, **dadurch gekennzeichnet, dass** die Kühlung von Rotor (20) und Stator (10) durch einen eigenen Kühlmittelkreislauf gebildet wird.

9. Vorrichtung nach Anspruch 8, **dadurch gekennzeichnet, dass** der Kühlmittelkreislauf eine Umwälzpumpe (30), ein Ausgleichsgefäß (31), einen Wärmetauscher (33) und Leitungen (32) zur Zirkulation des Kühlwassers durch Rotor (20) und Stator (10) aufweist.

10. Vorrichtung nach Anspruch 9, **dadurch gekennzeichnet, dass** die Umwälzpumpe (30) so angeordnet ist, dass das Kühlmittel im Gegenstrom zur saccharidhaltigen Lösung strömen kann.

11. Vorrichtung nach einem der vorangehenden Ansprüche, **dadurch gekennzeichnet, dass** das Verhältnis der zur Wärmeübertragung wirksamen Länge des Stators (20) zu seinem Innendurchmesser und das Verhältnis der zur Wärmeübertragung wirksamen Länge des Rotors (10) zu seinem Außendurchmesser zwischen 8,5 und 9,5 liegt.

12. Vorrichtung nach einem der vorangehenden Ansprüche, **dadurch gekennzeichnet, dass** der minimale Abstand zwischen Rotor (20) und Stator (10) 1,5 bis 5 mm beträgt.

13. Verfahren zur Herstellung von Fondant aus saccharidhaltiger Lösung, die eine Temperatur oberhalb oder im Bereich ihres Sättigungspunkts aufweist, **gekennzeichnet durch** Verwendung einer Vorrichtung nach einem der vorangehenden Ansprüche bei atmosphärischem Druck.
